(19) Europäisches Patentamt
European Patent Office
Office européen des brevets

(11) **EP 2 240 687 B1**

(12) **EUROPEAN PATENT SPECIFICATION**

(45) Date of publication and mention
of the grant of the patent:
**12.06.2013 Bulletin 2013/24**

(21) Application number: **08872197.2**

(22) Date of filing: **05.11.2008**

(51) Int Cl.:
***F03D 3/06*** (2006.01)

(86) International application number:
**PCT/PL2008/000078**

(87) International publication number:
**WO 2009/099344 (13.08.2009 Gazette 2009/33)**

(54) **WIND TURBINE ROTOR WITH THE THE VERTICAL ROTATION AXIS**

WINDTURBINENROTOR MIT VERTIKALER DREHACHSE

ROTOR D ÉOLIENNE AVEC AXE DE ROTATION VERTICAL

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **08.02.2008 PL 38441608**

(43) Date of publication of application:
**20.10.2010 Bulletin 2010/42**

(73) Proprietor: **Anew Institute Sp. z.o.o.
31-034 Krakow (PL)**

(72) Inventor: **NAUMENKO, Anatoliy
Kijów (UA)**

(74) Representative: **Tabor-Kmiecik, Katarzyna
Kancelaria Patentowa dr Wojciech Tabor
ul. Mazowiecka 28A/8-9
30-019 Krakow (PL)**

(56) References cited:
**EP-A- 0 679 805      EP-A- 1 541 865
WO-A-02/093006      DE-A1- 3 502 712
US-A- 4 566 854**

## Description

The invention is a wind turbine rotor with a vertical rotation axis, used in the turbines applying the Darrieus' principle while processing the wind energy into the mechanical energy of the rotation movement.

Solutions of turbine rotors with the vertical rotation axis known e.g. from the patent descriptions US 4264279 and US 4430044 have, connected with the hub of the drive shaft, at least two horizontal supports with vertically mounted rotor blades on the ends. Rotor blades have mostly a symmetrical airfoil and are connected with the support in the center zone of their height, with the division of the blade into the upper wing and the lower wing. During the rotor movement exerted by the wind pressure apart from the driving aerodynamic force, there is also centrifugal force. Both forces act in the centres of the mass of two wings. Both forces on half of the circular trajectory of the blade rotation are directed to the same direction - resulting in the longitudinal deformation of the wings and high bending stress in the connection zone of the blade and the support. On the other half of the circle, there are both forces of reverse senses.

The pulsating load changes, including polarity changes, have a significantly adverse effect on turbine wear and equipment efficiency. Known solutions consist in inserting additional elements into the construction of the rotor in order to stiffen the wings. For example, these may be the line tie rods - as in the rotor described in British Patent GB 2175350, or additional supports - as disclosed in the German Patent DE 3626917. The introduction of the strengthening elements results in the increase in the aerodynamic drag and the decrease of the turbine efficiency, especially if they include the acutely angled forms, which facilitate the volumetric turbulence. The adverse effect of the centrifugal force leads to partial reduction in the application of the changeable airfoil on the rotor length, with the length of the chord and the thickness of the airfoil decreasing towards both wing ends. Such solution, among others, was applied in the rotor disclosed in the patent description EP 0046370. In the brief description of the working conditions and technical problems appearing in these kinds of rotors, it is necessary to indicate the diversity of the aerodynamic force on the upper and lower wing and the construction susceptibility to the self-excited aeroelastic vibrations, that is, the flutter of the wings at high speeds of the surrounding air. The characteristics of the area may often determine the substantial decrease of the wind speed at the lower wing level. WO 2007/072016 A is considered as the closest prior art.

The aim of this invention is to draw up a simple construction of the rotor, which is characterised by the high stiffness and durability, low aerodynamic drag and high efficiency of the wind pressure force transformation on the driving force of the rotor shaft.

In this invention, similarly to the above disclosed solutions, the rotor involves at least two horizontal supports connected with the hub. Rotor blades (each consist of two wings joined together) with the symmetric or concave-convex airfoil with chord lenghts and airfoil thickness decreasing towards both wing ends are fixed tightly to the ends of the supports. The essence of the invention is that the upper and lower wing of the rotor blade deflect from the central zone radially outward at the angle relative to the rotating axis. At the same time, the chord lengths of the airfoil at both wings ends and the chord length in the central zone are approximately inversely proportional to the radiuses of their location relative to the rotating axis.

The use of the rotor with deflected wings which, at the same time have decreasing chord thickness of wings airfoil towards their tips, provides a stable intensity of wind power consumption along the length of the wings. Changing chord and thickness to move the mass of the blades closer to the center of the wing lowers the bending moment from the centrifugal force at the blades and their deformation. The frequency of free vibrations of blades with deflected wings and decreasing chord and thickness of airfoil is higher than that of straight blades. This facilitating result is particularly visible during gust winds. The deflected wings introduce aerodynamical twist - angle of the incoming air flow near the central zone of wing is bigger than at the wings end. The diversity of angle attack in practice eliminates the danger of flutter.

The aim of the further embodiments of the invention is to eliminate the influence of different wind speeds which appear at the upper and lower levels of the rotor.

For this purpose, it is advised that the angle of the lower wing deflection in the rotor should be larger than the angle of the upper wing deflection. The advised angle difference is in the range of 1° to 5°.

The solution in which the lower wing is longer than the upper one is also beneficial. The length difference in the range of 2% to 15% is recommended.

In accordance with the invention, in the rotor it would be advisable to use supports with the symmetrical airfoil and horizontally placed chords, as well as such connection with the hub that the longitudinal axes go through the geometrical centre of airfoils, and intersecting the rotating axis.

Referring to the fact that the rotor works with the highest possible efficiency if used is the optimal angle of attack wings for narrow range of the wind speeds, it is also useful to connect the driving blades with the supports to using known set points of the attack angles, which enables regulation in the range from -2° to +3°.

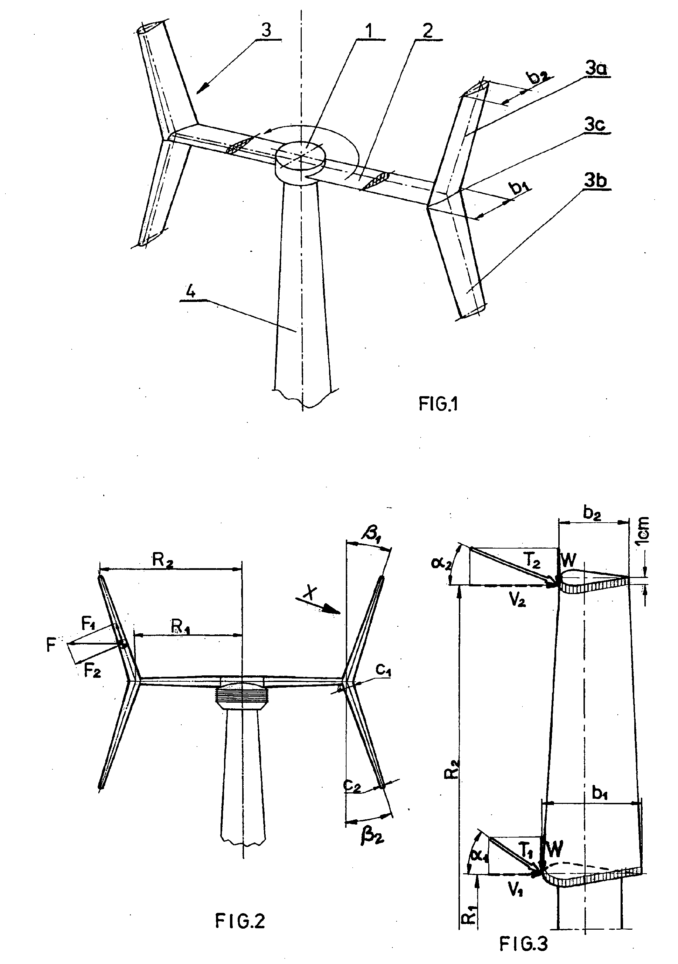

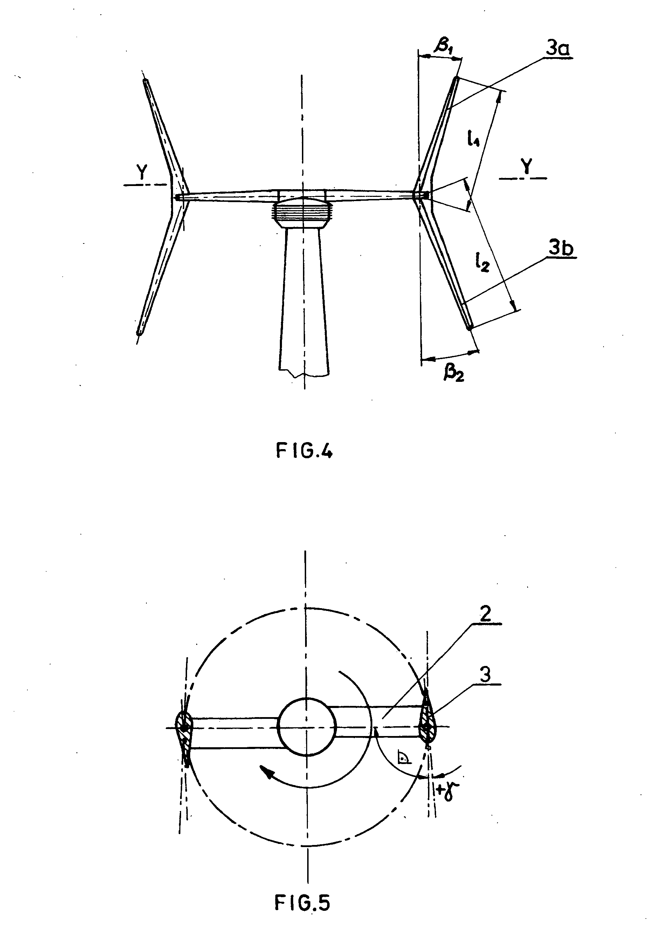

In order to completely understand the invention, the example of the schematic convention of the rotor is shown on the drawing. Particular figures on the drawing show: fig.1 - perspective view of the rotor with deflected wings, fig.2 - the view from the side, fig.3 - the view of the wing from the direction marked with the letter X on the fig.2, fig.4 - the view on the other rotor with wings of different length and varied deflection angles of upper and lower wings, whereas fig.5 shows the view from above on the rotor in its section according to the line Y-Y marked on the fig.4.

The rotor is fixed onto the hub 1 of the driving shaft bearing vertically in the tower of the wind turbine 4. Two horizontal supports 2, with the symmetrical airfoil are fixed to hub 1.

The airfoil chords of supports are horizontal and the longitudinal axis, which goes through the geometrical center of airfoils, intersecting the rotating axis of the rotor. The rotor blade 3 is fixed at the end of each support 2, the blade is connected with the supports 2 by the centre zone 3c of its own length. The upper wing 3a and the lower wing 3b of the rotor blade 3 have the same length, both wings are deflected radially outward and the angle relative to the rotating axis is $\beta_1 = \beta_2$. The cross sections of the upper wing 3a and the lower wing 3b have the symmetrical or concave-convex airfoil with the chord lenghts from $b_1$ to $b_2$ decreasing towards both wing ends and airfoil thickness from $c_1$ to $c_2$. The chord lengths $b_2$ of the airfoil at both wings ends 3a, 3b and the chord length $b_1$ in the centre zone 3c are inversely proportional to the radius $R_1, R_2$ of their location, relative to the rotating axis, as expressed in the relation: $b_1/b_2 = R_2/R_1$. When the blade form features apply to such dimensional and shape relations, the wind power consumption is stable along the entire length of the wing and, at the same time, the angle of the air attack $\alpha_1, \alpha_2$ of speed resultant $T_1, T_2$ of the airflow along the wing decreases. It is shown on the fig.3, where particular elementary surfaces of the wings, symbolically marked "1 cm" should generate the identical aerodynamic force, according to the formula:

$$Y = C_y \times S \times \rho \times V^2/2,$$

where

$C_y$ - indicates coefficient that is dependent on the shape of the airfoil and an angle of the incoming airflow,
$S$ - area of the elementary surface of the wing,
$\rho$ - air density,
$V$ - the speed of the incoming airflow

Nearby the central zone 3c the value of the product $C_y \times S$ is higher than at the end of the wing, where $V^2$ is a predominant value. In case of gust winds, the angle of air attack $\alpha$ may exceed the critical value. By changing the value of the deflection of the wing and sizes of chord of central zone and end of the wing, it is possible to reach even distribution of the aerodynamically force along the wing.

In the rotor, in accordance with the invention, the angle of the incoming airflow decreases continuously from $\alpha_1$ in the centre zone 3c to $\alpha_2$ at the ends of the wings 3a, 3b - creation of aerodynamical twist. The wing with the aerodynamical twist has its critical angle of attack starting at the central zone and gradually can reach the end of the wing. That is why the process of creation of the turbulence zone behind the wings also has gradual character that does not provoke pulsation in turbine or vibrations of the tower 4 and supports 2, which appear in turbines with straight blade rotors.

The outward deflection of the wings 3a, 3b allows for shortening the support 2 appropriately - which reduces aerodynamic drag of the turbine.

has the decreasing effect on the turbine aerodynamic resistance.

The rotor adapted to the balanced wind power consumption by the upper wing 3a and lower wing 3b is shown on the fig. 4, for the land conditions in which the wind speed is significantly diversified depending on the height above the ground level. The difference between aerodynamic forces appearing on the lower wing 3b and upper wing 3a creates the adverse torque moment of the supports.

The balance of the aerodynamic forces can be ensured with the use of the larger (by for example 3°) deflection angle $\beta_2$ of the lower wing 3b than the deflection angle $\beta_1$ of the upper wing 3a, maintainig equal lengths of the wings $l_1 = l_2$. The increase of the deflection angle value increases the circumferential speed of the lower wing and aerodynamic forces generated by the upper and lower wings become equal.

The load balance of the upper 3a and lower 3b wing can be also achieved at equal deflection angles $\beta_1 = \beta_2$ but longer lower wing 3b length $l_2$- for example about 10 % longer than the length $l_1$ of the upper wing 3a.

Testing of the rotor prototype, as specified in the invention, revealed that maximum efficiency of the power conversion for the different wind speeds W is achieved at different angles of attack $\gamma$, between the centre zone chord 3c and tangent line to trajectory of the movement of this section, fig. 5. For example, for the wind speed W=6 m/s, angle = -2°, for W= 9,5 m/s $\gamma$ = 0° and for the W= 11 m/s $\gamma$ = +2°. The rotor in the subject of the invention is equipped with one of the known solutions built-in to the support 2, which allows for changing the attack angle $\gamma$, during the operation of the turbine.

**Claims**

1. A wind turbine rotor with a vertical rotation axis, having connected with a hub, at least two horizontal supports on the ends of which are rotor blades, fixed tightly in their central zone to the support ends, each rotor blade consisting of two wings joined together, transverse sections of which wings have a symmetrical or concavo-convex airfoil wherein the lengths of the chord and the thickness of the airfoil are diminishing towards wings ends, **characterised in that** the upper wing (3a) and the lower wing (3b) of the rotor blade (3) radially deflect from the central zone (3c) outwards, forming a deflecting angle ($\beta_1$,

$\beta_2$) towards the rotation axis of the rotor, where the length of chords (b2) of the airfoil at the both wing ends (3a, 3b) and the length of the chord (b1) in the central zone (3c) are approximately inversely proportional to the radii (R1, R2) of their location in relation to the rotation axis of the rotor.

2. The rotor according to claim 1 wherein the deflecting angle ($\beta_2$) of the lower wing (3b) which is greater than the deflecting angle ($\beta_1$) of the upper wing (3a).

3. The rotor according to claim 2 wherein the deflecting angle ($\beta_2$) of the lower wing (3b) is greater by 1° to 5° than the deflecting angle ($\beta_1$) of the upper wing (3a).

4. The rotor according to claim 1 or 2 wherein the length ($l_2$) of the lower wing (3b) is greater than the length ($l_1$) of the upper wing (3a).

5. The rotor according to claim 4 wherein the length ($l_2$) of the lower wing (3b) is greater by 2% to 15% than the length ($l_1$) of the upper wing (3a).

6. The rotor according to claim 1 wherein the supports (2) have a symmetrical airfoil with a horizontally positioned chord and the longitudinal axis of the supports, goes through the geometrical center of airfoils and intersects the rotation axis of the rotor.

7. The rotor according to any one of claims 1 to 6 wherein the rotor blades (3) are connected with the supports (2) by means of using known set points of attack angle (y) setting the angle of stall (y) which makes changes possible in the range of -2° to +3°.

## Patentansprüche

1. Der Rotor für Windkraftanlage mit horizontaler Drehachse verfügt über mindestens 2 horizontale Stützen, die mit der Nabe verbunden werden und an derer Spitzen an Rotorblatt montiert werden und in der Mittelzone ihrer Höhe an Stützenden steif befestigt werden, wobei sich jedes Rotorblatt aus zwei miteinander verbundenen Flügeln zusammensetzt, wo Querschnitt dieser Flügel ein symmetrisches oder eingefallenes und gewölbtes Blatt bildet, wobei die Sehnenlänge und die Blattdicke bei Annährung an Flügelspitzen kleiner werden, **gekennzeichnet, dadurch dass** sich der Oberflügel (3a) und der Unterflügel (3b) des Rotorblatts (3) von der Mittelzone (3c) nach außen radial neigen und im Verhältnis zur Drehachse des Rotors einen Neigewinkel ($\beta_1$, $\beta_2$) bilden, wobei die Sehnenlänge (b2) des Flügels an beiden Flügelspitzen (3a, 3b) und die Sehnenlänge (b1) in der Mittelzone (3c) den Radien (R1, R2) in ihrer Lage gegenüber Drehachse des Rotors ungefähr antiproportional sind.

2. Der Rotor gemäß Anspruch 1, **gekennzeichnet, dadurch dass** der Neigewinkel ($\beta_2$) des Unterflügels (3b) größer als der Neigewinkel ($\beta_1$) des Oberflügels (3a) ist.

3. Der Rotor gemäß Anspruch 2, **gekennzeichnet, dadurch dass** der Neigewinkel ($\beta_2$) des Unterflügels (3b) um 1° bis 5° vom Neigewinkel ($\beta_1$) des Oberflügels (3a) ist.

4. Der Rotor gemäß Anspruch 1 oder 2, **gekennzeichnet, dadurch dass** die Länge ($l_2$) des Unterflügels (3b) von Länge ($l_1$) des Oberflügels (3a) ist.

5. Der Rotor gemäß Anspruch 4, **gekennzeichnet, dadurch dass** die Länge ($l_2$) des Unterflügels (3b) um ca. 2% bis 15% von der Länge ($l_1$) des Oberflügels (3a) ist.

6. Der Rotor gemäß Anspruch 1, **gekennzeichnet, dadurch dass** die Stützen (2) über ein symmetrisches Blatt mit horizontal platzierter Sehne verfügen und die Längsachse der Stützen über die geometrische Mitte der Blätter verläuft und die Drehachse des Rotors überschneidet.

7. Der Rotor gemäß eines von Ansprüchen 1 bis zu 6, **gekennzeichnet, dadurch dass** die Rotorblätter (3) mit Stützen (2) anhand von bekannten Punkten des Flügelwinkels (y) auf kritischen Flügelwinkel (y) verbunden werden, der es möglich macht, die Änderungen im Bereich von -2° bis zu +3° durchzuführen.

## Revendications

1. Le rotor de l'éolienne à axe de rotation vertical, possédant au moins deux supports horizontaux liés au moyeu, aux extrémités desquels les pales du rotor sont fixées et calées d'une manière rigide dans la zone du centre de leur hauteur aux extrémités des supports, à la fois chaque pale du rotor est composée de deux ailes liées entre elles, où la coupe transversale de ces ailes constitue une lame symétrique ou convexe concave, et à la fois la longueur de la corde ainsi que l'épaisseur de la lame diminuent en s'approchant des extrémités de l'aile, caractéristique par le fait que l'aile supérieure (3a) et l'aile inférieure (3b) du pale du rotor (3) s'écartent de manière radiale de la zone du centre vers l'extérieur (3c) en formant l'angle de déviation ($\beta_1$, $\beta_2$) par rapport à l'axe de rotation du rotor, et à la fois la longueur de la corde (b2) de la lame aux deux extrémités de l'aile (3a, 3b) ainsi que la longueur de la corde (b1) dans la zone du centre (3c) sont à peu près inversement proportionnelles aux rayons (R1, R2) de leur position par rapport à l'axe de rotation du rotor.

2. Le rotor selon la revendication 1 caractéristique par le fait que l'angle de déviation ($\beta_2$) de l'aile inférieure (3b) dépasse l'angle de déviation ($\beta_1$) de l'aile supérieure (3a).

3. Le rotor selon la revendication 2 caractéristique par le fait que l'angle de déviation ($\beta_2$) de l'aile inférieure (3b) dépasse de 1° à 5° l'angle de déviation ($\beta_1$) de l'aile supérieure (3a).

4. Le rotor selon la revendication 1 ou 2 caractéristique par le fait que la longueur ($l_2$) de l'aile inférieure (3b) dépasse la longueur ($l_1$) de l'aile supérieure (3a).

5. Le rotor selon la revendication 4 caractéristique par le fait que la longueur ($l_2$) de l'aile inférieure (3b) dépasse d'environ 2% jusqu'à 15% la longueur ($l_1$) de l'aile supérieure (3 a).

6. Le rotor selon la revendication 1 caractéristique par le fait que les supports (2) possèdent une lame symétrique avec une corde disposée horizontalement et l'axe oblongue des supports passe par le centre géométrique des lames et croise l'axe de rotation du rotor.

7. Le rotor selon une revendication des revendications de 1 à 6 caractéristique par le fait que les pales du rotor (3) sont liées aux supports (2), en utilisant les points connus de l'angle d'incidence (y) sur l'angle critique d'incidence (y) qui permet d'effectuer les changements d'une étendue de -2° à +3°.

FIG.1

FIG.2

FIG.3

FIG.4

FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4264279 A
- US 4430044 A
- GB 2175350 A
- DE 3626917
- EP 0046370 A
- WO 2007072016 A